# EUROPEAN PATENT APPLICATION

(11) **EP 3 799 012 A1**
(43) Date of publication of application: **31.03.2021**
(21) Application number: 19793876.4
(22) Date of filing: 12.04.2019
(51) Int. Cl.: G09B 17/00, G06F 3/0483, G06F 3/0484, G06F 3/0488, G09B 5/02, G09B 5/04

(54) **DEVICE AND PROGRAM FOR PERFORMING NEW TRAINING**

(30) Priority: 24.04.2018 JP 2018083056
(71) Applicant: Mentor Corporation Ltd., Izumiotsu-shi Osaka 595-0037 (JP)
(72) Inventor: NAGAI, Kuniyoshi, Izumiotsu-shi, Osaka 595-0037 (JP)
(74) Representative: Uexküll & Stolberg
(86) International application number: PCT/JP2019/015997
(87) International publication number: WO 2019/208268

(57) **Abstract**

This device is provided with a means for flash displaying a reversed text or image, an inverted text or image, or an inverted and reversed text or image in flash mode. In one embodiment, this device is furthermore provided with a means for causing a user to undergo book-reading training. In one embodiment, the means for causing a user to undergo book-reading training may include a means for displaying a page of a book, a means for displaying a marker on the page of the book, and a means for causing the display position of the marker to change at a prescribed time interval.

## Description

### [Technical Field]

The present invention relates to a device and a program for performing new training that is effective for developing skills such as speed reading.

### [Background Art]

It is conventionally known that it is possible to train the "ability to unconsciously understand", which is essential for development of skills such as speed reading, by performing flash training wherein letters that are randomly placed on a circumference are flashingly displayed (see for example Non Patent Literature 1).

### [Citation List]

### [Non Patent Literature]

Non Patent Literature 1: K. K. Asu Design, "BrainBoost", [online], [retrieved on April 12, 2018], the Internet <URL: http://brainboost.jp/system/>

### [Summary of Invention]

### [Technical Problem]

Conventional flash training needs to randomly place letters on a circumference. Thus, the problem to be solved of the conventional flash training lies in that although said flash training is suitable for languages using ideograms such as Japanese, said flash training is not suitable for languages using phonograms such as English. This problem to be solved was not known, but was recognized by the inventor of the present invention for the first time.

The present invention was invented for the first time based on the above-described recognition of the inventor of the present invention. The objective of the present invention is to establish new training which is effective for developing skills such as speed reading, and to provide a device and a program for performing the new training regardless of the type of the language such as Japanese or English.

### [Solution to Problem]

In one aspect of the present invention, the device of the present invention is a device configured to flashingly display a reversed text or image, or an inverted text or image, or an inverted and reversed text or image.

In one embodiment of the present invention, the device may comprise: a means for storing the text or image; and a means for flashingly displaying the text or image in a reversed or inverted manner or in an inverted and reversed manner.

In one embodiment of the present invention, the device may comprise: a means for storing a plurality of texts or images; and a means for flashingly displaying at least some of the plurality of texts or images in a predetermined order in a reversed or inverted manner or in an inverted and reversed manner.

In one embodiment of the present invention, the device may further comprise a means for causing a user to perform reading training.

In one embodiment of the present invention, the means for causing a user to perform reading training may comprise: a means for displaying a page of a book; a means for displaying a marker on the page of the book; and a means for changing a display position of the marker at a predetermined time interval.

In one embodiment of the present invention, the means for causing a user to perform reading training may further comprise a means for outputting a sound at the predetermined time interval, wherein a change in the display position of the marker may be synchronized with an output of the sound.

In one embodiment of the present invention, the means for causing a user to perform reading training may further comprise: a means for highlighting an area to be read indicating an area that the user should currently read on the page of the book; and a means for highlighting an area scheduled to be read indicating an area that the user should read next on the page of the book, wherein the marker may be displayed on the area to be read and/or the area scheduled to be read, and wherein an embodiment of highlighting the area to be read may be different from an embodiment of highlighting the area scheduled to be read.

In one embodiment of the present invention, the means for causing a user to perform reading training may further comprise a means for changing a display position of each of the area to be read and the area scheduled to be read at the predetermined time interval, wherein a change in the display position of each of the area to be read and the area scheduled to be read may be synchronized with a change in the display position of the marker.

In one embodiment of the present invention, the marker may comprise a touch detecting area that is able to detect a touch operation by a user, wherein the means for causing a user to perform reading training may further comprise: a means for determining whether a touch operation to the touch detecting area has been detected while the marker is displayed; and a means for outputting a result of the determination.

In one embodiment of the present invention, the device may comprise a means for evaluating a result of training of the flash display, wherein the means for causing a user to perform reading training may further comprise a means for setting an initial condition of the reading training based on a result of the evaluation.

In one embodiment of the present invention, the initial condition may comprise at least one of: a predetermined time interval of a sound generated from the device; or the number of display positions of the marker per page.

In one embodiment of the present invention, the device further may comprise a means for causing a user to perform speed listening training.

In one embodiment of the present invention, the means for causing a user to perform speed listening training may comprise: a means for setting an output speed scale factor of a sound to be output; and a means for outputting the sound to be output at the set output speed scale factor.

In one embodiment of the present invention, the means for causing a user to perform speed listening training may further comprise a means for identifying the sound to be output.

In one embodiment of the present invention, the device may comprise a means for evaluating a result of training of the flash display, wherein the means for causing a user to perform speed listening training may further comprise a means for setting an initial condition of the speed listening training based on a result of the evaluation.

In one embodiment of the present invention, the device may further comprise a means for causing a user to perform line spread training.

In one embodiment of the present invention, the means for causing a user to perform line spread training may comprise: a means for displaying a page of a book; a means for displaying a marker on the page of the book; a means for detecting that the user has touched the page of the book; and a means for changing a display position of the marker in response to detecting that the user has touched the page of the book.

In one embodiment of the present invention, the means for causing a user to perform line spread training may further comprise: a means for highlighting an area to be read indicating an area that the user should currently read on the page of the book; and a means for highlighting an area scheduled to be read indicating an area that the user should read next on the page of the book, wherein the marker may be displayed on the area to be read and/or the area scheduled to be read, and wherein an embodiment of highlighting the area to be read may be different from an embodiment of highlighting the area scheduled to be read.

In one embodiment of the present invention, the means for causing a user to perform line spread training may further comprise: a means for changing a display position of each of the area to be read and the area scheduled to be read in response to detecting that the user has touched the page of the book, wherein a change in the display position of each of the area to be read and the area scheduled to be read may be synchronized with a change in the display position of the marker.

In one embodiment of the present invention, the device may comprise a means for evaluating a result of training of the flash display, wherein the means for causing a user to perform line spread training may further comprise a means for setting an initial condition of the line spread training based on a result of the evaluation.

In one embodiment of the present invention, the initial condition may comprise the number of display positions of the marker per page.

In one aspect of the present invention, the device of the present invention comprises: a means for displaying a book having a plurality of pages; and a means for turning the plurality of pages of the book one by one at high speed.

In one aspect of the present invention, the program of the present invention is a program which is executed in a device, wherein the device comprises a processor unit, and wherein the program, when executed in the processor unit, causes the processor unit to execute at least flashingly displaying a text or image in a reversed or inverted manner or in an inverted and reversed manner.

In one aspect of the present invention, the program of the present invention is a program which is executed in a device, wherein the device comprises a processor unit, and wherein the program, when executed in the processor unit, causes the processor unit to execute at least: displaying a book having a plurality of pages; and turning the plurality of pages of the book one by one at high speed.

In one aspect of the present invention, the method of the present invention is a training method for developing a user's skill, wherein the method comprises: providing a first device comprising a means for causing the user to perform flash training and a second device comprising a means for causing the user to perform reading training to the user; using the first device to cause the user to perform flash training; and using the second device to cause the user to perform reading training.

In one embodiment of the present invention, the method may further comprise: providing a third device comprising a means for causing the user to perform speed listening training to the user; and using the third device to cause the user to perform speed listening training.

In one embodiment of the present invention, the method may further comprise: providing a fourth device comprising a means for causing the user to perform line spread training to the user; and using the fourth device to cause the user to perform line spread training.

### [Advantageous Effects of Invention]

According to the present invention, it is possible to provide a device and a program for performing new training that is effective for developing skills such as speed reading regardless of the type the language such as Japanese or English.

### [Brief Description of Drawings]

[Figure 1A] A figure showing one example of transition of a screen displayed by a device for performing new flash training.
[Figure 1B] A figure showing another example of transition of a screen displayed by a device for performing new flash training.
[Figure 1C] A figure showing another example of transition of a screen displayed by a device for performing new flash training.
[Figure 1D] A figure showing another example of transition of a screen displayed by a device for performing new flash training.
[Figure 1E] A figure showing one example of an image which is reversely displayed on a screen **140.**
[Figure 2] A figure showing one example of transition of a screen displayed by a device for performing new reading training.
[Figure 3] A figure showing one example of the configuration of a device for performing new flash training and new reading training and new line spread training and speed listening training.
[Figure 4] A figure showing one example of the flow of processing executed by a computer **300** in a case where a device for performing new flash training and new reading training and new line spread training and speed listening training is implemented by the computer **300.**
[Figure 5] A figure showing one example of the flow of processing executed in step **S406** in Figure **4****.**
[Figure 6] A figure showing one example of the flow of processing executed in step **S407** in Figure **4****.**
[Figure 7] A figure showing one example of the flow of processing executed in step **S408** in Figure **4****.**
[Figure 8A] A figure showing one example of the configuration of data stored in a memory unit **320.**
[Figure 8B] A figure showing one example of the configuration of sheet data for evaluating a result of flash training.
[Figure 8C] A figure showing one example the configuration of sheet data for setting an initial condition of reading training.
[Figure 8D] A figure showing one example of the configuration of sheet data for setting an initial condition of speed listening training.
[Figure 9] A figure showing one example of the flow of processing of the function of "turning pages at high speed".
[Figure 10] A figure showing one example of the flow of a training method for developing a user's skill.

### [Description of Embodiments]

The terms that are used herein are defined below.
* A "text" refers to one word, one phrase, one passage, one sentence, or a combination thereof.
* A "normal direction" of a text refers to a direction of a text in which the rotation angle of the text is 0° to 45° or 315° to 360°.
* A "reversed" text refers to a text in the direction wherein the rotation angle of the text is 135° to 225°.

As used herein, the rotation angle of a text is represented by 0° to 360°. Table 1 below shows the relationship between a rotation angle of a text and the text displayed in horizontal writing on a screen that corresponds to the rotation angle. Further, Table 2 below shows the relationship between a rotation angle of a text and the text displayed in vertical writing on a screen that corresponds to the rotation angle. It should be noted that a reference line is drawn adjacent to the texts displayed in each table below so that the angle of each displayed text can be readily visually recognized.

### [Table 1]

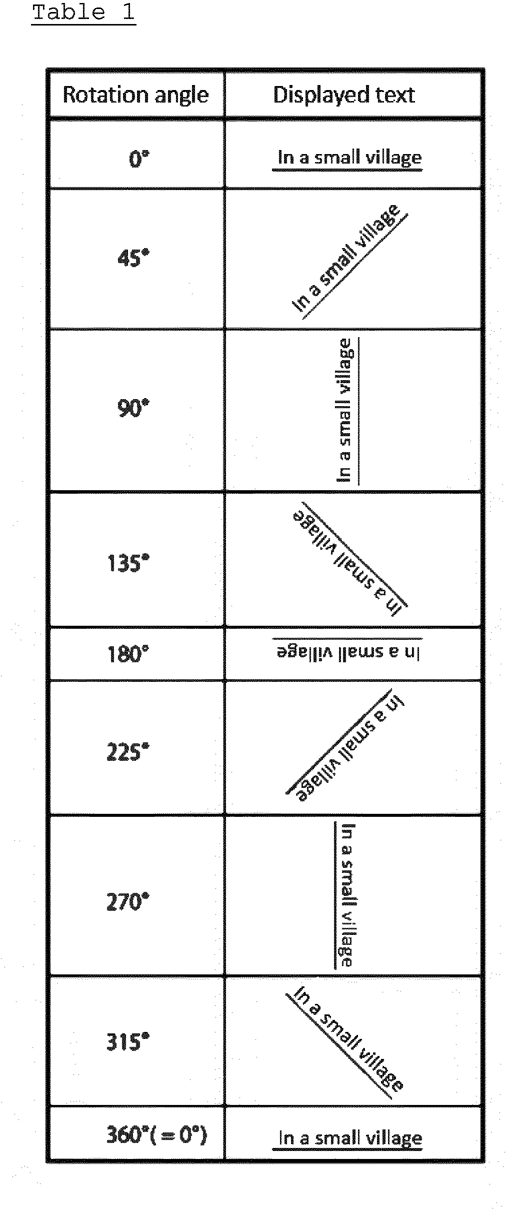

### [Table 2]

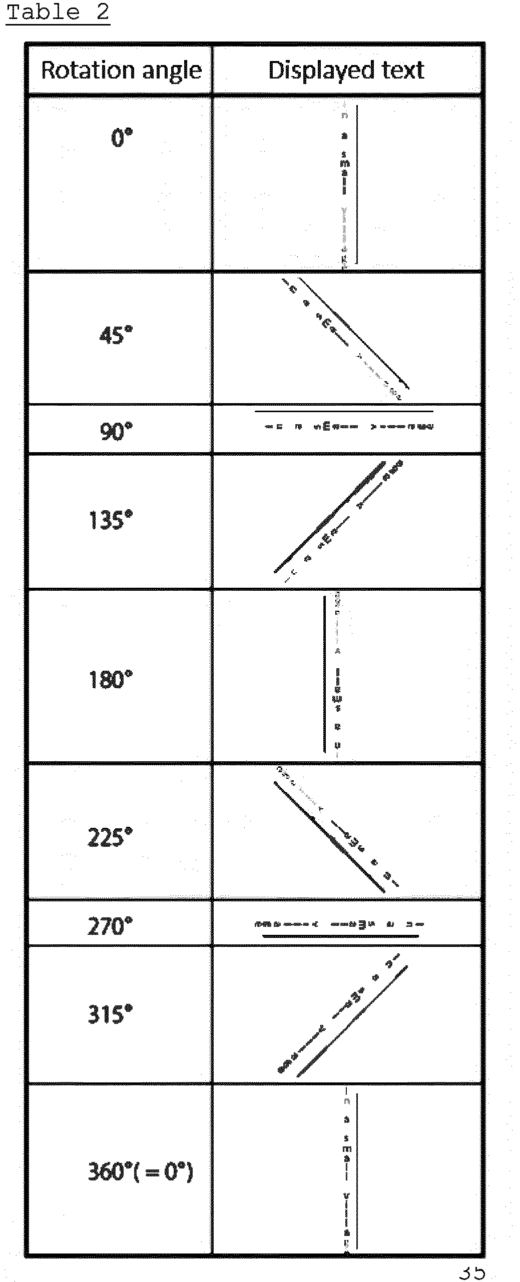

* A "normal direction" of an image refers to a direction of an image in which the rotation angle of the image is 0° to 45° or 315° to 360°.
* An "inverted text" refers to a text wherein a text in a normal direction is inverted around the longitudinal central axis in a two-dimensional plane.
* An "inverted and reversed text" refers to a text which is a reversed text and which is an inverted text.
* A "reversed" image refers to an image in the direction wherein the rotation angle of the image is 135° to 225°.

As used herein, the rotation angle of an image is represented by 0° to 360°. The relationship between a rotation angle of an image and the image displayed on a screen that corresponds to the rotation angle is the same as the relationship between a rotation angle of a text and the displayed text. Thus, detailed explanation of the relationship between a rotation angle of an image and the image displayed on a screen that corresponds to the rotation angle is omitted.
* An "inverted image" refers to an image wherein an image in a normal direction is inverted around the longitudinal central axis in a two-dimensional plane.
* An "inverted and reversed image" refers to an image which is a reversed image and which is an inverted image.
* "Flashingly display" refers to instantaneously displaying.

Embodiments of the present invention are explained hereinafter with reference to the drawings.

The inventor devised new flash training wherein a reversed text is flashingly displayed. In this new flash training, a reversed text is displayed only for an instant. A user (student) can train the "ability to unconsciously understand" by just seeing a reversed text which is displayed only for an instant without trying to read it. Seeing a reversed text which is displayed only for an instant puts a greater strain on the brain as compared to seeing a text in a normal direction which is displayed only for an instant. In the same manner, it is considered that seeing a reversed text which is displayed only for an instant puts a greater strain on the brain as compared to seeing letters randomly placed on a circumference which are displayed only for an instant in the conventional flash training because said letters are in a normal direction (0°) although they are randomly placed. In general, it is believed that the greater the strain on the brain is, the more useful it would be for developing skills such as speed reading. Thus, new flash training wherein a reversed text is flashingly displayed is expected to achieve a greater effect than the effect of the conventional flash training.

Furthermore, new flash training wherein a reversed text is flashingly displayed enables a text in a meaningful block to be displayed while maintaining the form of the block. Thus, regardless of the type of the language such as Japanese or English, it is possible to perform flash training that puts a great strain on the brain even when using any language. Accordingly, new flash training wherein a reversed text is flashingly displayed can provide an opportunity to develop skills such as speed reading to people around the would.

Furthermore, the inventor found that not only flash display of a reversed text but also training using flash display of an inverted text and training using flash display of an inverted and reversed text also achieve a greater effect than the effect of the conventional flash training.

Furthermore, the inventor found that not only flash display of a text but also training using flash display of an image (specifically, flash display of a reversed image, flash display of an inverted image, and flash display of an inverted and reversed image) achieves a greater effect than the effect of the conventional flash training. Training using flash display of an image is more significant than training using flash display of a text in that even very young children who cannot read can perform flash training.

Further, the inventor devised new reading training. This new reading training enables a user (student) to utilize an electronic book to train the ability of dividing a page of the book into some blocks and smoothly reading each block at a predetermined rhythm instead of reading each line on the page of the book (in other words, the ability of reading sentences at the speed in the brain).

Further, the inventor devised new line spread training for enlarging a field of view so that a plurality of lines can be read. This new line spread training enables a user (student) to improve the conventional reading way in which the user reads one line by one line, and acquire a reading way in which the user reads two lines at a time or a reading way in which the user reads three lines at a time.

Further, the inventor newly found an advantage of performing speed listening training that enables listening at higher speed than normal speed after the above-described flash training and reading training. Since the right brain is well trained by the flash training and reading training, performing speed listening training after the flash training and reading training enables a user (student) to promote outputs from the right brain to the left brain, which can thereby activate information transmission from the right brain to the left brain. In this manner, if speed listening training is performed after the flash training and reading training, the right brain is already activated before the speed listening training, so that a user who can usually listen at up to double speed will be able to listen at quadruple speed. Further, if speed listening training is performed after the flash training and reading training, the right brain is already activated before the speed listening training, so that it is possible to reduce the time required for a user to be able to listen at quadruple speed. Further, performing line spread training between the reading training and speed listening training can further improve the above-described effect.

Each training and a device for performing each training are explained hereinafter.

### 1. New flash training

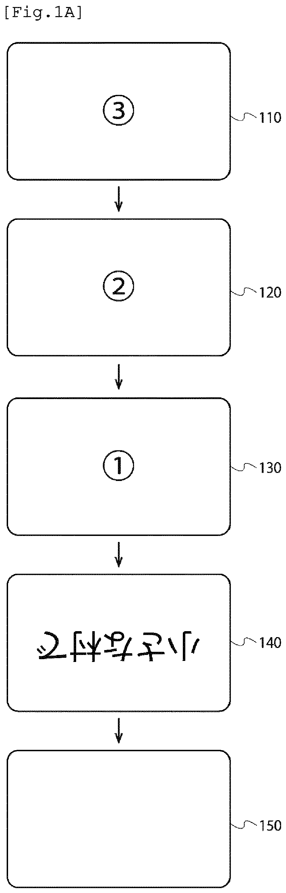

Figure **1A** shows one example of transition of a screen displayed by a device for performing new flash training.

In the example shown in Figure **1A****,** the screen transits in the order of screens **110, 120, 130, 140,** and **150.** Specifically, countdown is displayed on the screens **110, 120,** and **130,** a reversed text of a Japanese text " 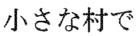 " ("In a small village" in English) is displayed on the screen **140** only for an instant, and the display of the reversed text disappears on the screen **150.**

Although the screens **110, 120,** and **130** on which countdown is displayed are not required in this case, countdown is preferably displayed in order to prevent a user from missing the timing when a reversed text is displayed in consideration that the reversed text is displayed for an instant. However, the displayed countdown is not limited to 3, 2, and 1, but may be 2, and 1. The number of screens on which the countdown is displayed does not matter. Further, a countdown sound or a countdown voice may be output in addition to or instead of the displayed countdown.

On the screen **140,** the time during which a reversed text is displayed is preferably less than 0.6 seconds, and the time during which a reversed text is displayed may be any of 0.5 seconds, 0.4 seconds, 0.3 seconds, 0.2 seconds, and 0.1 seconds. It is preferable that the time during which a reversed text is displayed can be arbitrarily set. For example, the time during which a reversed text is displayed may be gradually set, or may be successively set. It is thereby possible to change the time during which a reversed text is displayed depending on the degree of a user's improvement in flash training. In this manner, it is possible to perform new flash training by a reversed text being displayed only for an instant (in other words, flashingly displayed). It should be noted that the time during which a reversed text is displayed may become shorter every time the reversed text is displayed. It is thereby possible to put a greater strain on the brain every time the reversed text is displayed.

Although the reversed text shown on the screen **140** consists of one line in the example shown in Figure **1A****,** the present invention is not limited to this. The number of lines of the reversed text shown on the screen **140** may be any integer of 1 or greater. For example, the reversed text shown on the screen **140** may consist of two lines, or may consist of three lines. Further, although the reversed text shown on the screen **140** is in horizontal writing from left to right in the example shown in Figure **1A****,** the present invention is not limited to this. The reversed text shown on the screen **140** may be in horizontal writing from right to left, may be in vertical writing from top to bottom, or may be in vertical writing from bottom to top.

Further, it is possible to continuously perform new flash training for a predetermined period (e.g., 10 minutes) by repeating the transition of screens **110, 120, 130, 140,** and **150** while changing a reversed text which is flashingly displayed on the screen **140** each time. The reversed text which is flashingly displayed on the screen **140** can be randomly selected from, for example, a plurality of possible texts. Alternatively, the reversed text which is flashingly displayed on the screen **140** may be set in advance.

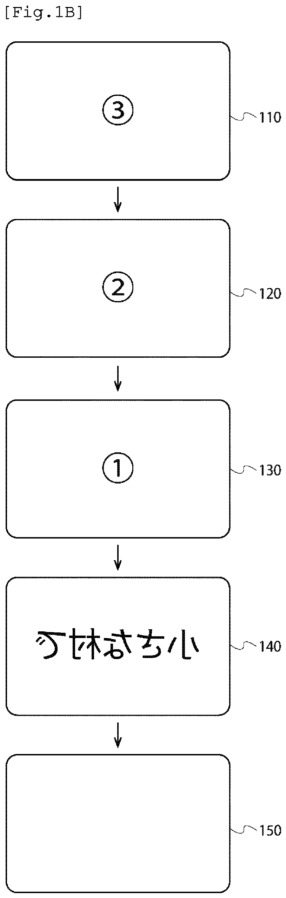

Figure **1B** shows another example of transition of a screen displayed by a device for performing new flash training.

In the example shown in Figure **1B**, countdown is displayed on screens **110, 120,** and **130,** an inverted text of a text " 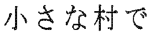 " ("In a small village" in English) is displayed on a screen **140** only for an instant, and the display of the inverted text disappears on a screen **150.** According to the screen transition shown in Figure **1B**, it is possible to perform new flash training in the same manner as the screen transition shown in Figure **1A****.**

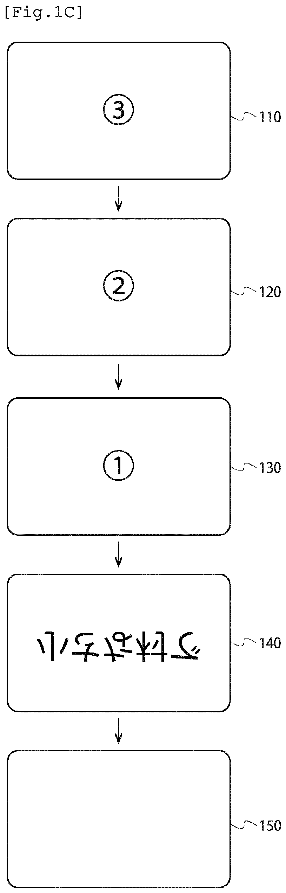

Figure **1C** shows another example of transition of a screen displayed by a device for performing new flash training.

In the example shown in Figure **1C****,** countdown is displayed on screens **110, 120,** and **130,** an inverted and reversed text of a text " 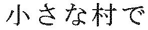 " ("In a small village" in English) is displayed on a screen **140** only for an instant, and the display of the inverted and reversed text disappears on a screen **150.** According to the screen transition shown in Figure **1C****,** it is possible to perform new flash training in the same manner as the screen transition shown in Figure **1A****.**

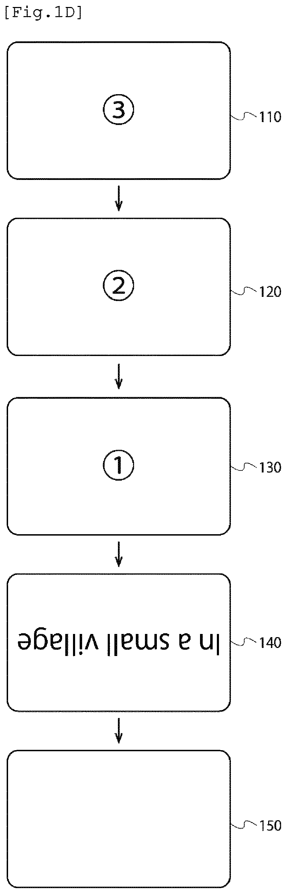

Figure **1D** shows another example of transition of a screen displayed by a device for performing new flash training.

In the example shown in Figure **1D****,** countdown is displayed on screens **110, 120,** and **130,** a reversed text of an English text "In a small village" is displayed on a screen **140** only for an instant, and the display of the reversed text disappears on a screen **150.** According to the screen transition shown in Figure **1D****,** it is possible to perform new flash training in the same manner as the screen transition shown in Figure **1A****.**

In the same manner as the example shown in Figure **1B** or Figure **1C****,** countdown may be displayed on the screens **110, 120,** and **130,** an inverted text of a text "In a small village" or an inverted and reversed text of a text "In a small village" may be displayed on the screen **140** only for an instant, and the display of the inverted text or the inverted and reversed text may disappear on the screen **150.**

Although examples in which a Japanese or English reversed text is flashingly displayed were explained in the examples shown in Figure **1A** to Figure **1D****,** the language to which the present invention can be applied is not limited to Japanese and English. The present invention can be applied to every language. The new flash training can thereby provide an opportunity to develop skills such as speed reading to people around the would.

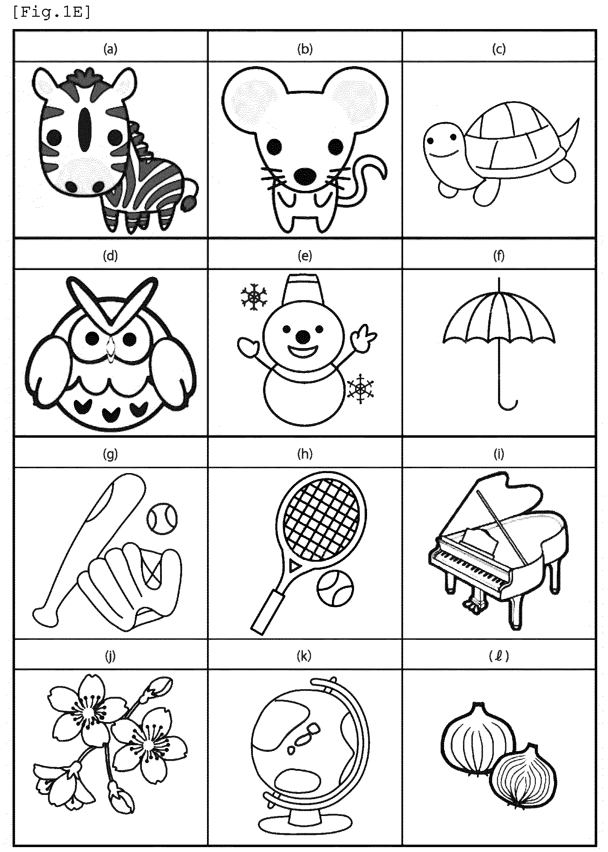

Although flash display of a text was explained in the examples shown in Figure **1A** to Figure **1D****,** the present invention is not limited to this. Figure **1E** shows one example of an image which is reversely displayed on a screen **140.** Each image shown in Figure **1E** can be reversely displayed on the screen **140** in addition to or instead of a text. Specifically, countdown can be displayed on screens **110, 120,** and **130,** a reversed image can be displayed on the screen **140** only for an instant, and the display of the reversed image can disappear on a screen **150.**

In the example shown in Figure **1E**, Figure **1E(a)** shows a "zebra", Figure **1E(b)** shows a "mouse", Figure **1E(c)** shows a "turtle", Figure **1E(d)** shows an "owl", Figure **1E(e)** shows a "snowman", Figure **1E(f)** shows an "umbrella", Figure **1E(g)** shows "baseball", Figure **1E(h)** shows "tennis", Figure **1E(i)** shows a "piano", Figure **1E(j)** shows "cherry blossoms", Figure **1E(k)** shows a "globe", and Figure **1E****(1)** shows an "onion". However, the image which is reversely displayed on the screen **140** is not limited to the above images. The image which is reversely displayed on the screen **140** is arbitrary. For example, the image which is reversely displayed on the screen **140** may be a character of a comic, or may be a character of a cartoon. The image which is reversely displayed on the screen **140** is preferably an image that can be recognized by very young children who cannot read.

In this manner, using an image instead of a text to materialize training of flash display enables, for example, even a very young child who cannot read to perform training of flash display.

When an image is flashingly displayed on the screen **140,** an inverted image may be flashingly displayed, or an inverted and reversed image may be flashingly displayed. Specifically, countdown may be displayed on the screens **110, 120,** and **130,** an inverted image may be displayed on the screen **140** only for an instant, and the display of the inverted image may disappear on the screen **150.** Alternatively, countdown may be displayed on the screens **110, 120,** and **130,** an inverted and reversed image may be displayed on the screen **140** only for an instant, and the display of the inverted and reversed image may disappear on the screen **150.**

### 2. New reading training

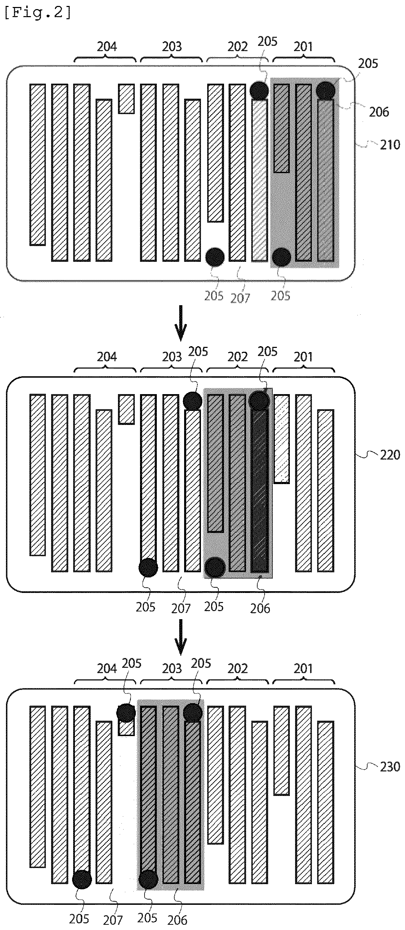

Figure **2** shows one example of transition of a screen displayed by a device for performing new reading training. In the example shown in Figure **2**, the screen transits in the order of screens **210, 220,** and **230.** Specifically, a page of a book is displayed on each of the screens **210, 220,** and **230** (it is supposed that this page contains a first block **201** containing a sentence of three lines, a second block **202** containing a sentence of three lines, a third block **203** containing a sentence of three lines, and a fourth block **204** containing a sentence of three lines). Markers **205** are displayed on the page of the book, and the position of a marker **205** displayed on the page of the book changes at a predetermined time interval. The page of the book displays an area to be read **206** indicating an area that a user should currently read and an area scheduled to be read **207** indicating an area that the user should read next. The display position of each of the area to be read **206** and the area scheduled to be read **207** changes in synchronization with changing the position where the marker **205** is displayed. The example shown in Figure **2** shows how the position of the marker **205** displayed on the page of the book, the position of the area to be read **206,** and the position of the area scheduled to be read **207** change as the screen transits in the order of the screens **210, 220,** and **230.**

The position of a marker **205** represents a position where the user should place a finger (e.g., index finger) when the user reads the page of the book by a block unit. The user can perform training of smoothly reading sentences by a block unit at a predetermined rhythm by moving the user's hand (or finger) so as to place the finger (e.g., index finger) on the marker **205** of which position changes as the position of the marker **205** changes at a predetermined time interval. It is thereby possible to train the ability of reading sentences at the speed in the brain. Furthermore, the predetermined time interval can be freely set depending on the degree of the user's improvement. This enables the user to start the training without difficulty at a pace suitable for the user.

The area to be read **206** and/or area scheduled to be read **207** may be displayed in addition to a marker **205.** However, it is not required to display the area to be read **206** and/or area scheduled to be read **207.**

The area to be read **206** indicates an area that the user should currently read. This area is displayed by a block unit. This enables the user to readily grasp the size of the area that the user should currently read by a block unit. Further, the user can perform training of reading sentences by a block unit by retaining visual recognition of the changing area to be read **206** with the user's eyes as the display position of the area to be read **206** changes at a predetermined time interval.

The area scheduled to be read **207** indicates an area that the user should read following the area to be read **206.** In other words, the area scheduled to be read **207** indicates an area in which an area to be read **206** is scheduled to be subsequently displayed. In the example shown in Figure **2****,** the area scheduled to be read **207** is displayed adjacent to the area to be read **206.** In this manner, displaying the area scheduled to be read **207** adjacent to the area to be read **206** enables the user to grasp in advance the size of an area that the user should read next before actually reading the area that the user should read next. This enables the user to avoid reading sentences as if following the display of the area to be read **206.**

The display embodiment of the area to be read **206** is different from the display embodiment of the area scheduled to be read **207.** However, these display embodiments can be any display embodiment as long as the user can distinguish the area to be read **206** from the area scheduled to be read **207** and visually recognize said areas. For example, the area to be read **206** may be highlighted by being colored in a dark color to be displayed while the area scheduled to be read **207** may be highlighted by being colored in a light color to be displayed (in other words, the area to be read **206** and the area scheduled to be read **207** may be highlighted so that said areas are distinguished from each other by gradation of one color). Alternatively, the area to be read **206** may be highlighted by being colored in yellow to be displayed while the area scheduled to be read **207** may be highlighted by being colored in blue to be displayed (in other words, the area to be read **206** and the area scheduled to be read **207** may be highlighted so that said areas are distinguished from each other by different colors). Alternatively, the area to be read **206** may be highlighted by being enclosed by a bold line frame while the area scheduled to be read **207** may be highlighted by being enclosed by a thin line frame (in other words, the area to be read **206** and the area scheduled to be read **207** may be highlighted so that said areas are distinguished from each other by different edgings).

In addition to changing the position where a marker **205** is displayed at a predetermined time interval, a sound may be output in synchronization with changing the position where the marker **205** is displayed. This enables the user to perform training of smoothly reading sentences by a block unit at a predetermined rhythm by using both visual sense and auditory sense.

Although the shape of a marker **205** is a circle in the example shown in Figure **2****,** the present invention is not limited to this. The marker **205** can have any shape. However, the marker **205** preferably has a shape on which the user can easily place a finger (e.g., index finger) because said marker represents a position where the user should place a finger (e.g., index finger).

The screen **210** shown in Figure **2** displays markers **205** at the top of the first line contained in the first block **201** (in other words, line 1 of the first block **201),** at the bottom of the last line contained in the first block **201** (in other words, line 3 of the first block **201),** at the top of the first line contained in the second block **202** (in other words, line 1 of the second block **202),** and at the bottom of the last line contained in the second block **202** (in other words, line 3 of the second block **202).** Further, the area to be read **206** is displayed in the first block **201** while the area scheduled to be read **207** is displayed in the second block **202.** In this case, it is important that the position where a marker **205** is displayed is in the upper right corner and the lower left corner of a block even when a sentence contained in the block is broken in the middle of the block. In this manner, placing the position where the marker **205** is displayed in the upper right corner and the lower left corner of a block regardless of the length of a sentence contained in the block enables the user to perform training of reading the page of the book by a block unit.

Once a predetermined time interval elapses after the screen **210** shown in Figure **2** is displayed, the position where a marker **205** is displayed changes. As a result, on the screen **220** shown in Figure **2****,** the marker **205** at the top of line 1 of the first block **201** and the marker **205** at the bottom of line 3 of the first block **201** are deleted while a new marker **205** is displayed at each of the top of line 1 of the third block **203** and the bottom of line 3 of the third block **203.** Further, the position where the area to be read **206** and the area scheduled to be read **207** are displayed may also be changed in synchronization with the change in the position where a marker **205** is displayed. For example, on the screen **220** shown in Figure **2****,** the display position of the area to be read **206** changes from inside the first block **201** to inside the second block **202** so that the area scheduled to be read **207** in the second block **202** would be replaced with an area to be read **206,** and an area scheduled to be read **207** would be newly displayed in the third block **203.** In this manner, it is possible to cause the user to be strongly aware of reading sentences by a block unit.

In the same manner, once a predetermined time interval elapses after the screen **220** shown in Figure **2** is displayed, the position where a marker **205** is displayed changes. As a result, on the screen **230** shown in Figure **2****,** the marker **205** at the top of line 1 of the second block **202** and the marker **205** at the bottom of line 3 of the second block **202** are deleted while a new marker **205** is displayed at each of the top of line 1 of the fourth block **204** and the bottom of line 3 of the fourth block **204.** Further, the position where the area to be read **206** and the area scheduled to be read **207** are displayed may also be changed in synchronization with the change in the position where a marker **205** is displayed. On the screen **230** shown in Figure **2****,** the display position of the area to be read **206** changes from inside the second block **202** to inside the third block **203** so that the area scheduled to be read **207** in the third block **203** would be replaced with an area to be read **206,** and an area scheduled to be read **207** would be newly displayed in the fourth block **204.** In this manner, it is possible to cause the user to be strongly aware of reading sentences by a block unit.

Furthermore, the first block **201** may be displayed in a suppressed manner in response to the position where the area to be read **206** is displayed being moved from the first block **201** to the second block **202** (for example, a sentence in the first block **201** may be displayed in a light color, or a sentence in the first block **201** may be hidden) . This enables the user to readily recognize that the reading training in the first block **201** is completed. The display embodiment in a suppressed manner in the first block **201** in this case may differ from both the display embodiment of the area to be read **206** and the display embodiment of the area scheduled to be read **207.** In the same manner, the second block **202** may be displayed in a suppressed manner in response to the position where the area to be read **206** is displayed being moved from the second block **202** to the third block **203** (for example, a sentence in the second block **202** may be displayed in a light color, or a sentence in the second block **202** may be hidden). This enables the user to readily recognize that the reading training in the second block **202** is completed. The display embodiment in a suppressed manner in the second block **202** in this case may also differ from both the display embodiment of the area to be read **206** and the display embodiment of the area scheduled to be read **207.**

Although one page contains four blocks and each of the four blocks contains a sentence of three lines in the example shown in Figure **2****,** the present invention is not limited to this. The number of blocks contained in one page can be any integer of 1 or greater. Further, the number of lines of a sentence contained in each block can be any integer of 1 or greater. Further, although sentences in vertical writing are displayed in the example shown in Figure **2****,** sentences in horizontal writing may be displayed.

In this manner, the position where a marker **205** is displayed moves in order at a predetermined time interval, so that the user can perform training of an appropriate position where the user should place a finger and an appropriate timing by moving the user's hand (or finger) in such a manner as to follow the position where the marker **205** is displayed. Further, it is possible to readily grasp the size of an area that should be read at a time (in other words, size of each block) by performing training while visually recognizing the area to be read **206** and the area scheduled to be read **207.** It is thereby possible to be strongly aware of reading sentences by a block unit. The number of display positions of markers per page is preferably decreased as the user repeatedly performs training. It is preferable to decrease the number of display positions of markers per page by, for example, displaying six markers per page → displaying four markers per page → displaying six markers per two pages → displaying two markers per page as the user repeatedly performs training. It is thereby possible to efficiently perform reading training by putting a greater strain on the brain depending on the degree of the user's improvement.

Furthermore, a marker **205** may comprise a touch detecting area that is able to detect a touch operation by the user. In this case, a device may determine whether a touch operation to the touch detecting area has been detected while the marker **205** is displayed. This enables the device to determine whether the user's finger has touched a correct position as the position where the marker **205** is displayed changes.

The display embodiment of a marker **205** may be changed when the user touches the touch detecting area comprised in the marker **205.** It does not matter how the display embodiment of the marker **205** is changed. For example, the display embodiment of the marker **205** may be changed by inverting the color of the marker **205,** the display embodiment of the marker **205** may be changed by highlighting the edge of the marker **205,** or the display embodiment of the marker **205** may be changed by displaying the marker **205** in a blinked manner. Alternatively, when the user touches the touch detecting area comprised in the marker **205,** a sound or voice indicating that the touch by the user has been detected may be output in addition to or instead of changing the display embodiment of the marker **205.** Alternatively, the number of times the user has touched the touch detecting area may be add up, and a score based on the number of times added up may be displayed on the screen.

### 3. New line spread training

One example of transition of a screen displayed by a device for performing new line spread training is the same as the screens **210** to **230** shown in Figure **2****.** In this case, the new line spread training refers to training for increasing the number of lines that a user should read at a time. Hereinafter, only a difference between the new reading training and the new line spread training is explained.

The display position of a marker **205** automatically changes at a predetermined time interval in the new reading training, whereas the display position of a marker **205** changes in response to the user touching any location on a page of a book in the new line spread training. The same applies to the display position of an area to be read **206** and the display position of an area scheduled to be read **207.**

In this manner, the user can read sentences at the user's own pace in the new line spread training. Thus, the user can steadily repeat training for increasing the number of lines of a sentence that can be read by a block unit while grasping the display position of the marker **205,** the range of the area to be read **206,** and the range of the area scheduled to be read **207.**

### 4. Speed listening training

The speed listening training in the present invention is training of repeatedly listening to a sound which is output at higher speed than normal speed (sound for speed listening training), thereby becoming able to listen to the sound which is output at the higher speed. The speed listening training in the present invention can be any known speed listening training.

### 5. Configuration of a device for performing new flash training and new reading training and new line spread training and speed listening training

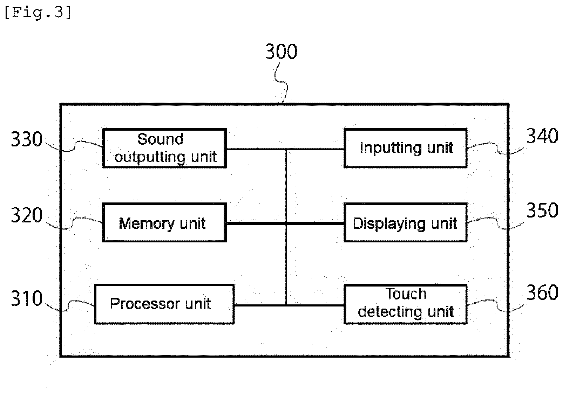

Figure **3** shows one example of the configuration of a device for performing new flash training and new reading training and new line spread training and speed listening training.

In the example shown in Figure **3****,** a device for performing new flash training and new reading training and new line spread training and speed listening training is implemented by a computer **300.**

The computer **300** comprises a processor unit **310** comprising one or more CPUs (central processing unit), a memory unit **320,** a sound outputting unit **330,** an inputting unit **340,** a displaying unit **350,** and a touch detecting unit **360.**

The memory unit **320** stores a program which is necessary for executing processing, data which is necessary for executing the program, and the like. In this case, it does not matter how the program is stored in the memory unit **320.** For example, the program may be pre-installed in the memory unit **320.** Alternatively, the program may be installed in the memory unit **320** by being downloaded via a network such as Internet, or may be installed in the memory unit **320** via a storage medium such as an optical disc or a USB.

The processor unit **310** controls the overall operation of the computer **300.** The processor unit **310** reads out a program stored in the memory unit **320** and executes the program. This enables the computer **300** to function as a device for executing a desired step.

The sound outputting unit **330** is configured to be able to output a sound.

The inputting unit **340** is configured to be able to receive an input (e.g., a user input). One example of the inputting unit **340** includes, but is not limited to, a microphone, a keyboard, and a touch board.

The displaying unit **350** is configured to be able to display information (e.g., a reversed text, a page of a book, a marker).

The touch detecting unit **360** is configured to be able to detect a touch by a user.

Although an example in which the computer **300** comprises the processor unit **310,** the memory unit **320,** the sound outputting unit **330,** the inputting unit **340** and the displaying unit **350** was explained in the example shown in Figure **3****,** the present invention is not limited to this.

For example, the displaying unit **350** does not necessarily need to be built in the computer **300.** The displaying unit **350** may be a displaying device external to the computer **300,** or may be a part of a user device (e.g., a smartphone or a tablet) external to the computer **300.** In this case, the displaying device and the user device are configured to be able to be connected to the computer **300** via a wired, wireless, or any type of a network. In this manner, when the displaying unit **350** is external to the computer **300,** the computer **300** only needs to be configured to have a means for displaying necessary information (by the displaying unit **350** external to the computer **300)** (in other words, function of controlling the displaying unit **350** to display necessary information). Such a configuration also remains within the scope of the present invention.

In the same manner, the touch detecting unit **360** does not necessarily need to be built in the computer **300.** The touch detecting unit **360** may be a touch detecting device external to the computer **300,** or may be a part of a user device (e.g., a smartphone or a tablet) external to the computer **300.** In this case, the touch detecting device and the user device are configured to be able to be connected to the computer **300** via a wired, wireless, or any type of a network. In this manner, when the touch detecting unit **360** is external to the computer **300,** the computer **300** only needs to be configured to have a means for detecting a touch by a user (by the touch detecting unit **360** external to the computer **300)** (in other words, function of controlling the touch detecting unit **360** to detect a touch by a user). Such a configuration also remains within the scope of the present invention.

In the same manner, the sound outputting unit **330** does not necessarily need to be built in the computer **300.** The sound outputting unit **330** may be a sound outputting device (e.g., an external speaker) external to the computer **300,** or may be a part of a user device (e.g., a smartphone or a tablet) external to the computer **300.** The sound outputting device and the user device are configured to be able to be connected to the computer **300** via a wired, wireless, or any type of a network. In this manner, when the sound outputting unit **330** is external to the computer **300,** the computer **300** only needs to be configured to have a means for generating a necessary sound (by the sound outputting unit **330** external to the computer **300)** (in other words, function of controlling the sound outputting unit **330** to generate a necessary sound). Such a configuration also remains within the scope of the present invention.

In the same manner, the inputting unit **340** does not necessarily need to be built in the computer **300.** The inputting unit **340** may be an inputting device (e.g., a microphone) external to the computer **300,** or may be a part of a user device (e.g., a smartphone or a tablet) external to the computer **300.** The inputting device and the user device are configured to be able to be connected to the computer **300** via a wired, wireless, or any type of a network. In this manner, when the inputting unit **340** is external to the computer **300,** the computer **300** only needs to be configured to have a means for inputting necessary information (by the inputting unit **340** external to the computer **300)** (in other words, function of controlling the inputting unit **340** to input necessary information). Such a configuration also remains within the scope of the present invention.

Although an example in which a device for performing new flash training and new reading training and new line spread training and speed listening training is implemented by the computer **300** was explained in the example shown in Figure **3****,** the present invention is not limited to this. Any configuration can be employed for a device for performing new flash training and new reading training and new line spread training and speed listening training as long as a step equivalent to a desired step executed by the computer **300** is executed. For example, a device for performing new flash training and new reading training and new line spread training and speed listening training may be implemented by a circuit wired on a substrate. Such a configuration also remains within the scope of the present invention.

Alternatively, a device for performing new flash training and new reading training and new line spread training and speed listening training may be implemented by a single device, or may be implemented by a plurality of devices. For example, a device for performing new flash training may be implemented by a first device, a device for performing new reading training may be implemented by a second device, a device for performing new line spread training may be implemented by a third device, and a device for performing speed listening training may be implemented by a fourth device, wherein the first device, the second device, the third device, and the fourth device may be separate. In this case, the first device, the second device, the third device, and the fourth device may be connected via any means such as a network. Alternatively, a device for performing two of the new flash training and new reading training and new line spread training and speed listening training may be implemented by a fifth device, a device for performing one of the remaining two of the new flash training and new reading training and new line spread training and speed listening training may be implemented by a sixth device, and a device for performing the other of the remaining two of the new flash training and new reading training and new line spread training and speed listening training may be implemented by a seventh device, wherein the fifth device, the sixth device, and the seventh device may be separate. In this case, the fifth device, the sixth device, and the seventh device may be connected via any means such as a network. Alternatively, a device for performing two of the new flash training and new reading training and new line spread training and speed listening training may be implemented by a eighth device, and a device for performing the remaining two of the new flash training and new reading training and new line spread training and speed listening training may be implemented by a ninth device, wherein the eighth device and the ninth device may be separate. In this case, the eighth device and the ninth device may be connected via any means such as a network. Alternatively, a device for performing three of the new flash training and new reading training and new line spread training and speed listening training may be implemented by a tenth device, and a device for performing the remaining one of the new flash training and new reading training and new line spread training and speed listening training may be implemented by an eleventh device, wherein the tenth device and the eleventh device may be separate. In this case, the tenth device and the eleventh device may be connected via any means such as a network. Such a configuration also remains within the scope of the present invention.

### 6. Flow of processing executed in a computer

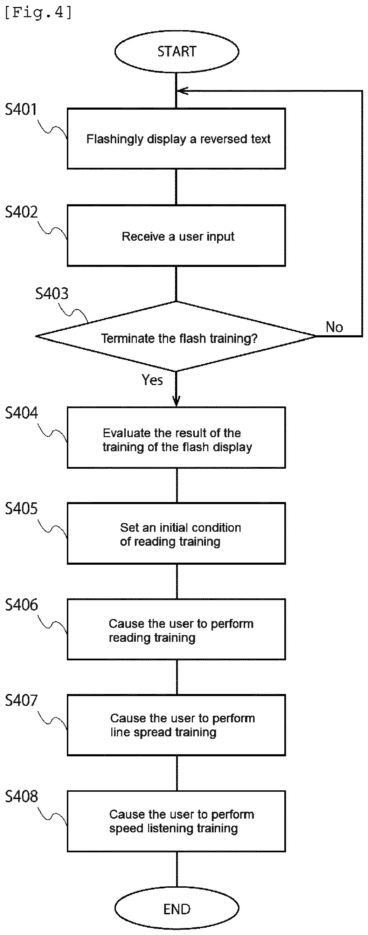

Figure **4** shows one example of the flow of processing executed by the computer **300** in a case where a device for performing new flash training and new reading training and new line spread training and speed listening training is implemented by the computer **300.** This processing is executed by, for example, the processor unit **310** comprised in the computer **300.** It should be noted that the device for performing new flash training and new reading training and new line spread training and speed listening training is provided to a user in advance. Each step shown in Figure **4** is explained in detail hereinafter.

Step **S401:** Processing of flashingly displaying a reversed text is executed. This processing is accomplished by, for example, reading out a text stored in the memory unit **320** and flashingly displaying the text in a reversed manner. Alternatively, when a plurality of texts are stored in the memory unit **320,** this processing may be accomplished by reading out at least some of the plurality of texts stored in the memory unit **320** and flashingly displaying the at least some texts in a reversed manner in a predetermined order. It is preferable that the at least some texts that are read out from the memory unit **320** are randomly selected. One example of the screen displayed by the displaying unit **350** of the computer **300** by execution of this processing is as described above with reference to Figure **1A** to Figure **1D****.**

In addition to or instead of step **S401,** processing of flashingly displaying a reversed image may be executed in step **S401'.** This processing may be accomplished by, for example, reading out an image stored in the memory unit **320** and flashingly displaying the image in a reversed manner. Alternatively, when a plurality of images are stored in the memory unit **320,** this processing may be accomplished by reading out at least some of the plurality of images stored in the memory unit **320** and flashingly displaying the at least some images in a reversed manner in a predetermined order. It is preferable that the at least some images that are read out from the memory unit **320** are randomly selected. One example of the screen displayed by the displaying unit **350** of the computer **300** by execution of this processing is as described above with reference to Figure **1A** to Figure **1E****.**

Step **S402:** Processing of receiving a user input is executed. In this case, the user input is for a user to answer what the flashingly displayed text was. Alternatively, the user input is for the user to answer what the flashingly displayed image was. One example of the user input includes, but is not limited to, voice data output from a microphone, which is one example of the inputting unit **340,** letter string data output from a keyboard, which is one example of the inputting unit **340,** and data indicating a choice selected from a plurality of choices output from a touch board, which is one example of the inputting unit **340.** The processor unit **310** is able to receive the voice data or letter string data or data indicating a choice as a user input. The received user input is temporarily stored in the memory unit **320,** and referred to in step **S404** described below.

Step **S403:** Processing of determining whether the flash training is terminated is executed. This processing is accomplished by, for example, determining whether the processing of flashingly displaying a reversed text in step **S401** has been executed a predetermined number of times or for a predetermined period of time. Alternatively, this processing is accomplished by, for example, determining whether the processing of flashingly displaying a reversed image in step **S401'** has been executed a predetermined number of times or for a predetermined period of time. If the determination result is "Yes", the processing advances to step **S404.** If the determination result is "No", the processing returns to step **S401** or step **S401'.**

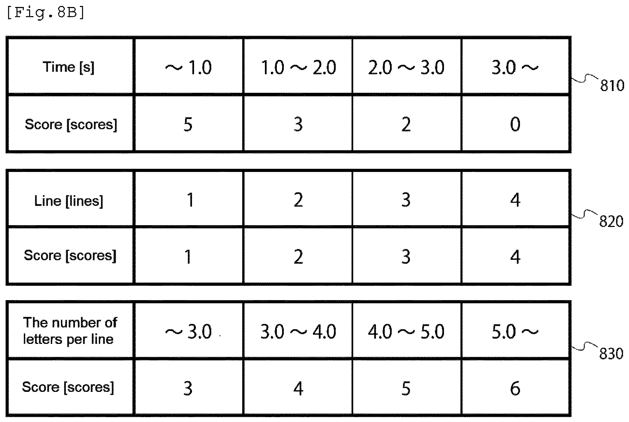

Step **S404:** Processing of evaluating the result of the flash training is executed. This processing is accomplished by, for example, determining whether the text flashingly displayed in a reversed manner in step **S401** matches the user input received in step **S402** (in other words, the text that the user answered) and evaluating the determination result. Alternatively, this processing is accomplished by, for example, determining whether the image flashingly displayed in a reversed manner in step **S401'** matches the user input received in step **S402** (in other words, the image that the user answered) and evaluating the determination result. The determination result is evaluated by, for example, referring to sheet data for evaluating a result of flash training which will be described below (Figure **8B****)**. However, step **S404** is not a required step.

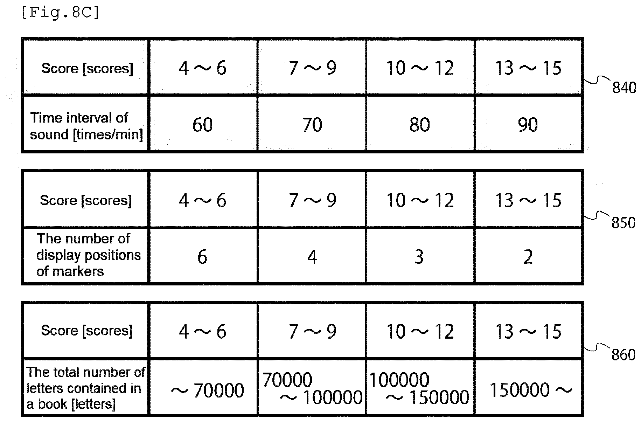

Step **S405:** Processing of setting an initial condition of reading training based on the evaluation of the result of the flash training is executed. This processing is accomplished by, for example, setting an initial condition of the reading training (e.g., a time interval of a sound, the number of display positions of markers per page, the total number of letters contained in a book, or the like) based on a score. For example, the initial condition of the reading training is set by referring to sheet data for setting an initial condition of reading training which will be described below (Figure **8C****).** However, step **S405** is not a required step.

Furthermore, processing of setting an initial condition of line spread training based on the evaluation of the result of the flash training may be further executed in step **S405'** in addition to or instead of step **S405.** This processing is accomplished by, for example, setting an initial condition of the line spread training (e.g., the number of display positions of markers per page, the total number of letters contained in a book, or the like) based on a score. For example, the initial condition of the line spread training can be set in the same manner as a method for setting the initial condition of the reading training by referring to sheet data for setting an initial condition of reading training which will be described below (Figure **8C****)** .

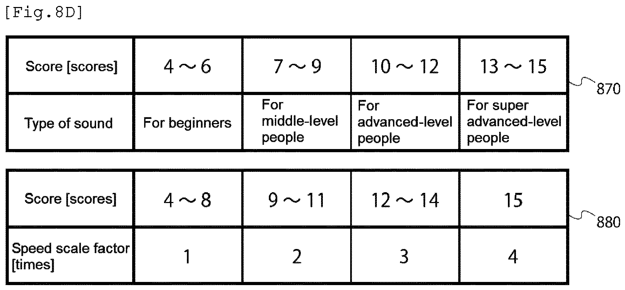

Furthermore, processing of setting an initial condition of speed listening training based on the evaluation of the result of the flash training may be further executed in step **S405"** in addition to or instead of step **S405.** This processing is accomplished by, for example, setting an initial condition of the speed listening training (e.g., the type of the sound for speed listening training, the output speed scale factor of the sound for speed listening training, or the like) based on a score. For example, the initial condition of the speed listening training is set in the same manner as a method for setting the initial condition of the speed listening training by referring to sheet data for setting an initial condition of speed listening training which will be described below (Figure **8D****)** .

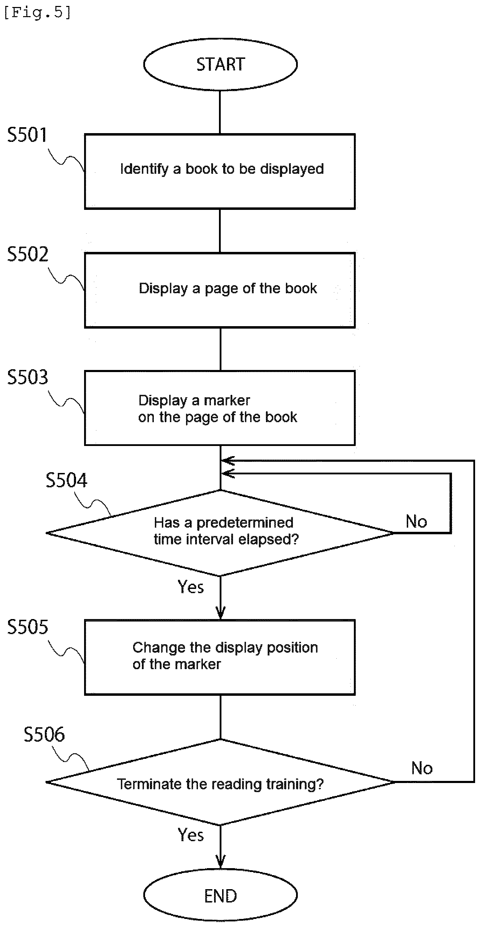

Step **S406:** Processing of causing the user to perform reading training is executed. This processing will be described below with reference to Figure **5****.**

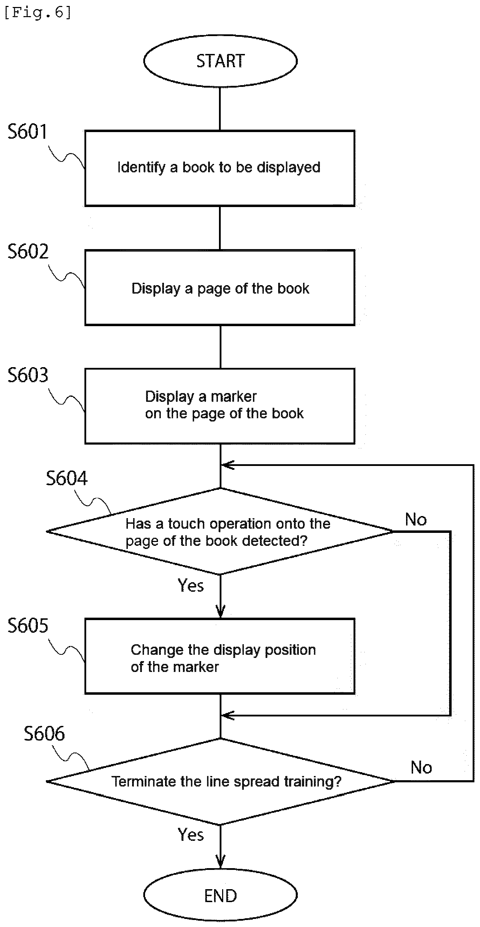

Step **S407:** Processing of causing the user to perform line spread training is executed. This processing will be described below with reference to Figure **6****.** However, this step **S407** is not a required step.

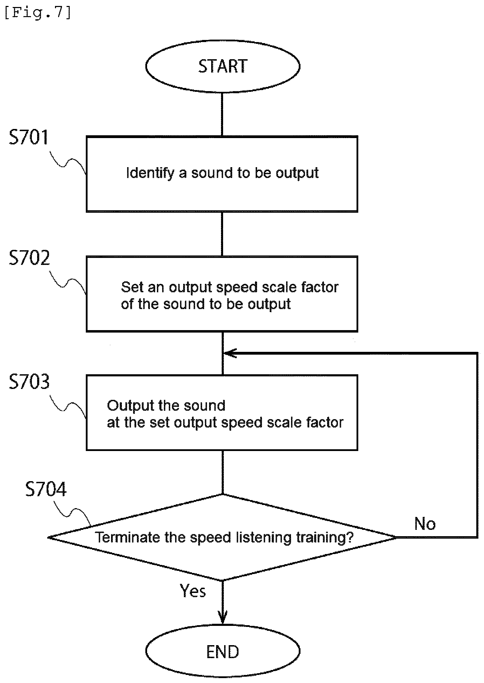

Step **S408:** Processing of causing the user to perform speed listening training is executed. This processing will be described below with reference to Figure **7**. However, this step **S408** is not a required step.

Although flash display of a reversed text and flash display of a reversed image were explained in the above-described embodiment, the present invention is not limited to this. For example, an inverted text may be flashingly displayed, an inverted and reversed text may be flashingly displayed, an inverted image may be flashingly displayed, or an inverted and reversed image may be flashingly displayed instead of flash display of a reversed text and flash display of a reversed image.

Further, although an example in which a device for performing new flash training and new reading training and new line spread training and speed listening training is provided to a user in advance was explained in the above-described embodiment, the present invention is not limited to this. When step **S407** and/or step **S408** in Figure **4** are omitted, a device for performing at least new flash training and new reading training can be provided to a user.

Figure **5** shows one example of the flow of processing executed in step **S406** in Figure **4**. This processing is executed by, for example, the processor unit **310** comprised in the computer **300.** Each step shown in Figure **5** is explained in detail hereinafter.

Step **S501:** Processing of identifying a book to be displayed is executed. This processing is accomplished by, for example, identifying a book from a plurality of books stored in the memory unit **320** according to the initial condition set in step **S405** in Figure **4****.** Alternatively, this processing may be accomplished by randomly selecting a book from a plurality of books stored in the memory unit **320.** Alternatively, this processing may be accomplished by the user selecting a book from a plurality of books that are set by the user in advance.

Step **S502:** Processing of displaying a page of the book identified in Step **S501** is executed. This processing is accomplished by, for example, the processor unit **310** transmitting a control signal to the displaying unit **350** in order to cause the displaying unit **350** to display a page of the identified book.

Step **S503:** Processing of displaying a marker on the page of the book is executed. This processing is accomplished by, for example, the processor unit **310** transmitting a control signal to the displaying unit **350** in order to cause the displaying unit **350** to display a marker on the page of the book. In this case, the number of display positions of markers per page can be changed according to, for example, the initial conditions set in step **S405** in Figure **4**. One example of the marker is a marker **205** shown in Figure **2**. A marker comprises a touch detecting area that is able to detect a touch operation by the user.

Step **S504:** After the processing of step **S503,** processing of determining whether a predetermined time interval has elapsed is executed. If the determination result is "Yes", the processing advances to step **S505.** If the determination result is "No", the processing returns to step **S504.**

Step **S505:** Processing of changing the position of the marker displayed on the page in step **S503** is executed. This processing is accomplished by, for example, the processor unit **310** transmitting a control signal to the displaying unit **350** in order to cause the displaying unit **350** to display a marker in a new position on the page after a predetermined time interval has elapsed from the display of the marker on the page in step **S504.** When the page of the book is divided into a plurality of blocks, for example, a marker at the top of the first line contained in the first block of the plurality of blocks and a marker at the bottom of the last line contained in the first block may be changed to the top of the first line contained in the second block of the plurality of blocks (e.g., the third block **203**) and the bottom of the last line contained in the second block, respectively.

Step **S506:** Processing of determining whether the reading training is terminated is executed. This processing is accomplished by, for example, determining whether the determination processing in step **S504** has been executed a predetermined number of times, or whether the processing from steps **S501** to **S505** has been executed for a predetermined period of time. If the determination result is "Yes", the processing is terminated. If the determination result is "No", the processing returns to step **S504.**

Furthermore, in step **S503** in Figure **5****,** the computer **300** (in particular, the processor unit **310** comprised in the computer **300)** may further execute processing of highlighting an area to be read **206** and an area scheduled to be read **207** on the page of the book, and in step **S505,** the computer **300** (in particular, the processor unit **310** comprised in the computer **300)** may execute processing of changing the display position of each of the area to be read **206** and the area scheduled to be read **207.** In this case, the change in the display position of each of the area to be read **206** and the area scheduled to be read **207** is preferably synchronized with the change in the display position of the marker. Furthermore, the embodiment of highlighting the area to be read **206** is different from the embodiment of highlighting the area scheduled to be read **207.** Further, one example of how the display position of each of the area to be read **206** and the area scheduled to be read **207** is changed is as explained with reference to Figure **2****.** Furthermore, processing wherein when the display position of the area to be read **206** is changed, the display position of the area to be read **206** before the change is displayed in a suppressed manner may be executed. One example of this display in a suppressed manner is also as explained with reference to Figure **2**.

Further, the computer **300** (in particular, the processor unit **310** comprised in the computer **300**) may execute processing of outputting a sound at a predetermined time interval at any timing after step **S502** and before step **S504.** This processing is accomplished by, for example, the processor unit **310** transmitting a control signal to the sound outputting unit **330** in order to cause the sound outputting unit **330** to output a sound at a predetermined time interval. In this case, the predetermined time interval (in other words, time interval of a sound) can be changed according to, for example, the initial condition set in step **S405** in Figure **4**. One example of the sound which is output from the sound outputting unit **330** (sound for reading training) includes, but is not limited to, a metronome sound. The sound which is output from the sound outputting unit **330** (sound for reading training) can be any sound. For example, the sound which is output from the sound outputting unit **330** (sound for reading training) may be a sound which is set by the user in advance.

Further, the computer **300** (in particular, the processor unit **310** comprised in the computer **300**) may execute processing of determining whether a touch operation to the touch detecting area by the user has been detected at any timing after step **S503** and before step **S506.** This processing is accomplished by, for example, the processor unit **310** transmitting a control signal to the touch detecting unit **360** in order to cause the touch detecting unit **360** to determine whether the user has made a touch operation to the touch detecting area comprised in a marker displayed on the page. Furthermore, when the computer **300** (in particular, the processor unit **310** comprised in the computer **300)** has determined that a touch operation to the touch detecting area by the user was detected, processing of presenting the result of the determination to the user may be further executed. This processing is accomplished by, for example, the processor unit **310** transmitting a control signal to the displaying unit **350** in order to cause the displaying unit **350** to change the display embodiment of the marker (e.g., inverting the color of the marker, or highlighting the edge of the marker, or displaying the marker in a blinked manner). Alternatively, this processing may be accomplished by the processor unit **310** transmitting a control signal to the sound outputting unit **330** in order to cause the sound outputting unit **330** to output a sound (sound for reading training). Alternatively, this processing may be accomplished by the processor unit **310** transmitting a control signal to the displaying unit **350** in order to cause the displaying unit **350** to display a score based on the determination result.

Figure **6** shows one example of the flow of processing executed in step **S407** in Figure **4**. This processing is executed by, for example, the processor unit **310** comprised in the computer **300.** Each step shown in Figure **6** is explained in detail hereinafter.

Step **S601:** Processing of identifying a book to be displayed is executed. This processing corresponds to step **S501** in Figure **5****.**

Step **S602:** Processing of displaying a page of the book identified in step **S601** is executed. This processing corresponds to step **S502** in Figure **5****.**

Step **S603:** Processing of displaying a marker on the page of the book is executed. This processing corresponds to step **S503** in Figure **5****.**

Step **S604:** Processing of determining whether a touch operation onto the page of the book by the user has been detected is executed. This processing is accomplished by, for example, the processor unit **310** transmitting a control signal to the touch detecting unit **360** in order to cause the touch detecting unit **360** to determine whether the user has made a touch operation to the page of the book. If the determination result is "Yes", the processing advances to step **S505.** If the determination result is "No", the processing advances to step **S506.**

Step **S605:** In response to detecting a touch operation to the touch detecting area by the user, processing of changing the position of the marker displayed on the page in step **S603** is executed. This processing corresponds to step **S505** in Figure **5****.**

Step **S606:** Processing of determining whether the line spread training is terminated is executed. This processing is accomplished by, for example, determining whether the processing from step **S601** to step **S605** has been executed for a predetermined period of time. If the determination result is "Yes", the processing is terminated. If the determination result is "No", the processing returns to step **S604.**

Furthermore, in step **S603** in Figure **6****,** the computer **300** (in particular, the processor unit **310** comprised in the computer **300)** may further execute processing of highlighting an area to be read **206** and an area scheduled to be read **207** on the page of the book, and in step **S605,** the computer **300** (in particular, the processor unit **310** comprised in the computer **300)** may execute processing of changing the display position of each of the area to be read **206** and the area scheduled to be read **207** (for example, in response to detecting that that the user has touched the page of the book). In this case, the change in the display position of each of the area to be read **206** and the area scheduled to be read **207** is preferably synchronized with the change in the display position of the marker. Furthermore, the embodiment of highlighting the area to be read **206** is different from the embodiment of highlighting the area scheduled to be read **207.** Further, one example of how the display position of each of the area to be read **206** and the area scheduled to be read **207** is changed is as explained with reference to Figure **2**. Furthermore, processing wherein when the display position of the area to be read **206** is changed, the display position of the area to be read **206** before the change is displayed in a suppressed manner may be executed. One example of this display in a suppressed manner is also as explained with reference to Figure **2**.

Figure **7** shows one example of the flow of processing executed in step **S408** in Figure **4**. This processing is executed by, for example, the processor unit **310** comprised in the computer **300.** Each step shown in Figure **7** is explained in detail hereinafter.

Step **S701:** Processing of identifying a sound to be output is executed. This processing is accomplished by, for example, identifying a sound for speed listening training from a plurality of sounds for speed listening training stored in the memory unit **320** according to the initial condition set in step **S405"** in Figure **4**. Alternatively, this processing may be accomplished by randomly identifying a sound for speed listening training from a plurality of sounds for speed listening training stored in the memory unit **320.** Alternatively, this processing may be accomplished by the user selecting a sound for speed listening training from a plurality of sounds for speed listening training that are set by the user in advance.

Step **S702:** Processing of setting an output speed scale factor of the sound to be output is executed. This processing is accomplished by, for example, identifying and setting an output speed scale factor from a plurality of output speed scale factors stored in the memory unit **320** according to the initial condition set in step **S405"** in Figure **4****.** Alternatively, this processing may be accomplished by randomly identifying and setting an output speed scale factor from a plurality of output speed scale factors stored in the memory unit **320.** Alternatively, this processing may be accomplished by the user selecting and setting an output speed scale factor from a plurality of output speed scale factors that are set by the user in advance.

Step **S703:** Processing of outputting the sound for speed listening training identified in step **S701** at the output speed scale factor set in step **S702** is executed.

Step **S704:** Processing of determining whether the speed listening training is terminated is executed. This processing is accomplished by, for example, determining whether an input for terminating the speed listening training has been received by the inputting unit **340,** or whether the processing of step **S703** has been executed for a predetermined period of time. If the determination result is "Yes", the processing is terminated. If the determination result is "No", the processing returns to step **S703.**

Although it was explained that a sound to be output is identified in step **S701** in the example shown in Figure **7****,** the present invention is not limited to this. For example, step **S701** may be omitted, and a predetermined sound for speed listening training may be output in step **S703.**

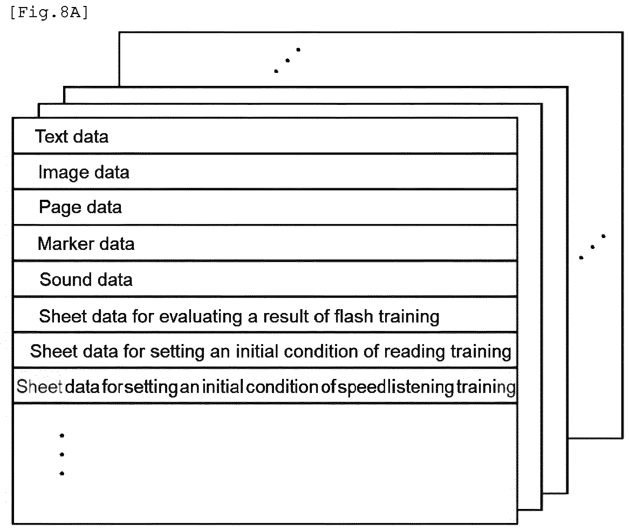

Figure **8A** shows one example of the configuration of data stored in a memory unit **320.**

The memory unit **320** stores text data representing a text to be flashingly displayed, image data representing an image to be flashingly displayed, page data representing a page of a book for reading training, marker data representing an attribute of a marker such as shape or color, sound data representing a sound output from the sound outputting unit **330** (e.g., sound for reading training, sound for speed listening training), sheet data for evaluating a result of flash training, sheet data for setting an initial condition of reading training, sheet data for evaluating a result of speed listening training or the like.

Figure **8B** shows one example of the configuration of sheet data for evaluating a result of flash training.

In the example shown in Figure **8B****,** the sheet data for evaluating a result of flash training comprises: a sheet **810** representing the corresponding relationship between the time required from displaying of a text and a user input and the score; a sheet **820** representing the corresponding relationship between the number of lines of a text which is flashingly displayed and the score; and a sheet **830** representing the corresponding relationship between the number of letters per line of a text which is flashingly displayed and the score. However, the present invention is not limited to this.

In the example shown in Figure **8B****,** the sheet **810** shows that when the time required from displaying of a text to a user input is less than 1.0 second, the score is 5, when the time required from displaying of a text to a user input is 1.0 second or greater and less than 2.0 seconds, the score is 3, when the time required from displaying of a text to a user input is 2.0 seconds or greater and less than 3.0 seconds, the score is 2, and when the time required from displaying of a text to a user input is 3.0 seconds or greater, the score is 0.

In the example shown in Figure **8B****,** the sheet **820** shows that when the number of lines of a text which is flashingly displayed is 1, the score is 1, when the number of lines of a text which is flashingly displayed is 2, the score is 2, when the number of lines of a text which is flashingly displayed is 3, the score is 3, and when the number of lines of a text which is flashingly displayed is 4, the score is 4.

In the example shown in Figure **8B****,** the sheet **830** shows that when the number of letters per line of a text which is flashingly displayed is less than 3.0, the score is 3, when the number of letters per line of a text which is flashingly displayed is 3.0 or greater and less than 4.0, the score is 4, when the number of letters per line of a text which is flashingly displayed is 4.0 or greater and less than 5.0, the score is 5, and when the number of letters per line of a text which is flashingly displayed is 5.0 or greater, the score is 5.

The evaluation of the result of the flashingly may be represented as, for example, the sum of the scores of each of the sheet **810,** sheet **820,** and sheet **830.** Alternatively, said evaluation may be represented as the sum of the scores of the sheet **810** multiplied by a predetermined scale factor, the scores of the sheet **820** multiplied by the predetermined scale factor, and the scores of the sheet **830** multiplied by the predetermined scale factor.

For example, when a text of three lines, "I" "went out" "early in the morning", is flashingly displayed and the user inputs a correct answer in 1.5 seconds from displaying of the text, 3 scores will be obtained with reference to the sheet **810,** 3 scores will be obtained with reference to the sheet **820,** and 5 scores will be obtained with reference to the sheet **830.** This indicates that the evaluation (scores) of the result of the flash training is 3 scores + 3 scores + 5 scores = 11 scores.

Although an example in which each of the time, the number of lines, and the number of letters per line is classified into four was explained in the example shown in Figure **8B****,** the present invention is not limited to this. The number of classification of each of the time, the number of lines, and the number of letters per line is any integer of 2 or greater.

Figure **8C** shows one example the configuration of sheet data for setting an initial condition of reading training.

In the example shown in Figure **8C****,** the sheet data for setting an initial condition of reading training comprises: a sheet **840** representing the corresponding relationship between the output time interval of a sound (sound for reading training) and the score; a sheet **850** representing the corresponding relationship between the number of display positions of markers per page and the score; and a sheet **860** representing the corresponding relationship between the total number of letters contained in a book and the score. However, the present invention is not limited to this.

In the example shown in Figure **8C**, the sheet **840** shows that when the score is 4 to 6, the output time interval of a sound for reading training is 60 times/minute, when the score is 7 to 9, the output time interval of a sound for reading training is 70 times/minute, when the score is 10 to 12, the output time interval of a sound for reading training is 80 times/minute, and when the score is 13 to 15, the output time interval of a sound for reading training is 90 times/minute.

In the example shown in Figure **8C**, the sheet **850** shows that when the score is 4 to 6, the number of display positions of markers per page is 6, when the score is 7 to 9, the number of display positions of markers per page is 4, when the score is 10 to 12, the number of display positions of markers per page is 3, and when the score is 13 to 15, the number of display positions of markers per page is 2.

In the example shown in Figure **8C**, the sheet **860** shows that when the score is 4 to 6, a book having less than 70000 letters in total is selected, when the score is 7 to 9, a book having 70000 or greater and less than 100000 letters in total is selected, when the score is 10 to 12, a book having 100000 or greater and less than 150000 letters in total is selected, and when the score is 13 to 15, a book having 150000 or greater letters in total is selected.

For example, when the evaluation (scores) of the result of the flash training is 11, the initial condition of the reading training is set so that a sound of which time interval is 80 times/minute is output, there are 3 display positions of markers per page, a book having 100000 or greater and less than 150000 letters in total is selected, and the selected book is displayed on the displaying unit **350.** In this manner, it is possible to automatically set the initial condition of the reading training depending on the evaluation (scores) of the result of the flash training. It is thereby possible to try to optimize the training efficiency depending on the degree of the user's improvement. Furthermore, any book may be selected from the books having 100000 or greater and less than 150000 letters in total in any manner. For example, a book to be displayed on the displaying unit **350** may be randomly selected by the computer **300** from the books having 100000 or greater and less than 150000 letters in total, or a book to be displayed on the displaying unit **350** may be selected by the user from the books having 100000 or greater and less than 150000 letters in total.

Although an example in which the score is classified into four (in other words, four types of scores of 4 to 6, 7 to 9, 10 to 12 and 13 to 15) was explained in the example shown in Figure **8C****,** the present invention is not limited to this. The number of classification of scores is any integer of 2 or greater.

Figure **8D** shows one example of the configuration of sheet data for setting an initial condition of speed listening training.

In the example shown in Figure **8D****,** the sheet data for setting an initial condition of speed listening training comprises: a sheet **870** representing the corresponding relationship between the type of a sound for speed listening training and the score; and a sheet **880** representing the corresponding relationship between the output speed scale factor of a sound for speed listening training and the score. However, the present invention is not limited to this.

In the example shown in Figure **8D****,** the sheet **870** shows that when the score is 4 to 6, the type of a sound for speed listening training is for beginners, when the score is 7 to 9, the type of a sound for speed listening training is for middle-level people, when the score is 10 to 12, the type of a sound for speed listening training is for advanced-level people, and when the score is 13 to 15, the type of a sound for speed listening training is for super advanced-level people. Furthermore, a plurality of sounds for speed listening training are classified into a sound for beginners, a sound for middle-level people, a sound for advanced-level people, and a sound for super advanced-level people in advance depending on the number of words and/or the degree of difficulty in listening of a language which is output or the like.

In the example shown in Figure **8D****,** the sheet **880** shows that when the score is 4 to 8, the output speed scale factor of a sound for speed listening training is 1 (normal speed), when the score is 7 to 9, the output speed scale factor of a sound for speed listening training is 2, when the score is 10 to 12, the output speed scale factor of a sound for speed listening training is 3, and when the score is 13 to 15, the output speed scale factor of a sound for speed listening training is 4.

For example, when the evaluation (scores) of the result of the flash training is 11, the sound for advanced-level people is identified for a sound for speed listening training that should be output, and the output speed scale factor of the identified sound for advanced-level people is set to be 2. In this manner, it is possible to automatically set the initial condition of the speed listening training depending on the evaluation (scores) of the result of the flash training. It is thereby possible to try to optimize the training efficiency depending on the degree of the user's improvement.

Although an example in which the score is classified into four (in other words, four types of scores of 4 to 6, 7 to 9, 10 to 12 and 13 to 15, and four types of scores of 4 to 8, 9 to 11, 12 to 14 and 15) was explained in the example shown in Figure **8D****,** the present invention is not limited to this. The number of classification of scores is any integer of 2 or greater.

Although it was explained that the data shown in Figure **8A** to Figure **8D** is stored in the memory unit **320** of the computer **300** in the above explanation, the present invention is not limited to this. The data shown in Figure **8A** to Figure **8D** may be stored in, for example, a database unit connected to the computer **300.** Alternatively, the data shown in Figure **8A** to Figure **8D** may be stored in a single external hard disc device of the computer **300,** or may be stored on a cloud to which the computer **300** is connected via a network. In this case, the computer **300** may further comprise a communication interface unit for controlling the communication via the network.

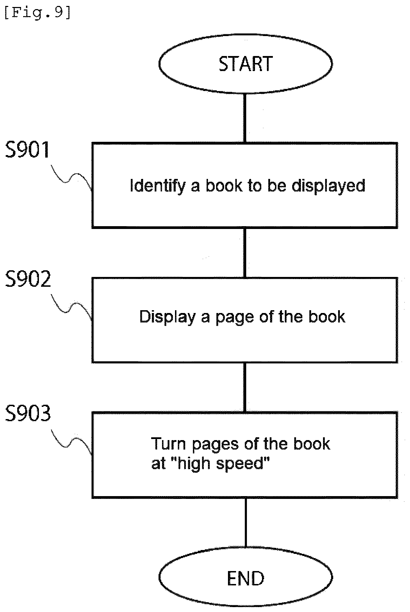

Figure 9 shows one example of the flow of processing of the function of "turning pages at high speed". This processing is executed by, for example, the processor unit **310** comprised in the computer **300.** Each step shown in Figure **9** is explained in detail hereinafter.

Step **S901:** Processing of identifying a book to be displayed is executed. Since this processing is the same as the processing in step **S501** in Figure **5****,** detailed explanation is omitted herein.

Step **S902:** Processing of displaying a page of the book identified in step **S901** is executed. Since this processing is the same as the processing in Step **S502** in Figure **5****,** detailed explanation is omitted herein.

Step **S903:** Processing of turning pages of the book at "high speed" is executed.

As used herein, turning pages of a book at "high speed" refers to turning pages at speed that is able to present 70000 or greater letters in Japanese in one minute. Although such a function of "turning pages at high speed" is not necessary for normal reading, said function is considered extremely useful for the above-described new reading training. This is because the speed at which a human turns pages of a physical book has been a speed-determining condition of conventional reading training, while according to such a function of "turning pages at high speed", it is possible to turn pages of an electronic book at speed remarkably higher than the speed at which a human turn pages of a physical book, so that said function is suitable for the new reading training for the purpose of utilizing an electronic book to read sentences at the speed in the brain.

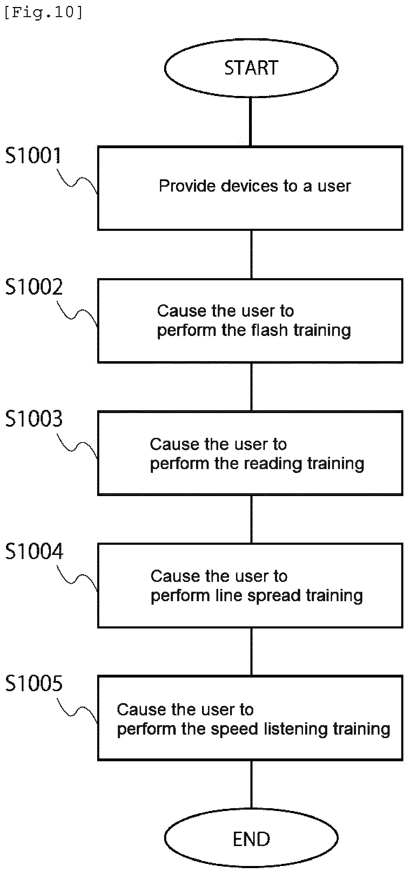

Figure **10** shows one example of the flow of a training method for developing a user's skill. Each step shown in Figure **10** is explained in detail hereinafter.

Step **S1001:** A first device comprising a means for causing a user to perform new flash training, a second device comprising a means for causing the user to perform new reading training, a third device comprising a means for causing the user to perform speed listening training, and a fourth device comprising a means for causing the user to perform line spread training are provided to the user. The new flash training is, for example, the training explained with reference to Figure **1A** to Figure **1E****.** The new reading training is, for example, the training explained with reference to Figure **2****.** The new line spread training is the training for increasing the number of lines that a user should read at a time explained in relation to Figure **2****.** Furthermore, the first device, second device, third device and fourth device may be configured so that all of them are put together into one device, may be configured so that only a part of them are put together, or may be configured so that they are all different devices from one another.

Step **S1002:** The first device is used to cause the user to perform the flash training. One example of a method for using the first device to cause the user to perform the flash training is as explained with reference to Figure **1A** to Figure **1E** and Step **S401** to **S403** in Figure **4****.**

Step **S1003:** The second device is used to cause the user to perform the reading training. One example of a method for using the second device to cause the user to perform the reading training is as explained with reference to Figure **2** and Figure **5****.**

Step **S1004:** The fourth device is used to cause the user to perform the line spread training. One example of a method for using the fourth device to cause the user to perform the line spread training is as explained with reference to Figure **6****.** Furthermore, step **S1004** may be omitted.

Step **S1005:** The third device is used to cause the user to perform the speed listening training. One example of a method for using the third device to cause the user to perform the speed listening training is as explained with reference to Figure **7****.** Furthermore, step **S1005** may be omitted.

The present invention has been exemplified with preferable embodiments of the present application, but the present invention should not be interpreted to be limited to the embodiments. It is understood that the scope of the present invention should be interpreted based solely on the Claims. It is understood that those skilled in the art can implement an equivalent scope from the descriptions of the specific preferred embodiments of the present invention based on the description of the present invention and common general knowledge.

### [Industrial Applicability]

The present invention is useful as an invention providing a device and a program or the like for performing new training that is effective for developing skills such as speed reading regardless of the type of the language such as Japanese or English.

### [Reference Signs List]

- **300**: Device
- **310**: Processor unit
- **320**: Memory unit
- **330**: Sound outputting unit
- **340**: Inputting unit
- **350**: Displaying unit
- **360**: Touch detecting unit

## Claims

1. A device configured to flashingly display a reversed text or image, or an inverted text or image, or an inverted and reversed text or image.

2. The device of claim 1, comprising:
a means for storing the text or image; and
a means for flashingly displaying the text or image in a reversed or inverted manner or in an inverted and reversed manner.

3. The device of claim 1, comprising:
a means for storing a plurality of texts or images; and
a means for flashingly displaying at least some of the plurality of texts or images in a predetermined order in a reversed or inverted manner or in an inverted and reversed manner.

4. The device of any one of claims 1 to 3, further comprising a means for causing a user to perform reading training.

5. The device of claim 4, wherein the means for causing a user to perform reading training comprises:
a means for displaying a page of a book;
a means for displaying a marker on the page of the book; and
a means for changing a display position of the marker at a predetermined time interval.

6. The device of claim 5, wherein the means for causing a user to perform reading training further comprises a means for outputting a sound at the predetermined time interval, and
wherein a change in the display position of the marker is synchronized with an output of the sound.

7. The device of claim 5 or 6, wherein the means for causing a user to perform reading training further comprises:
a means for highlighting an area to be read indicating an area that the user should currently read on the page of the book; and
a means for highlighting an area scheduled to be read indicating an area that the user should read next on the page of the book,
wherein the marker is displayed on the area to be read and/or the area scheduled to be read, and
wherein an embodiment of highlighting the area to be read is different from an embodiment of highlighting the area scheduled to be read.

8. The device of claim 7, wherein the means for causing a user to perform reading training further comprises:
a means for changing a display position of each of the area to be read and the area scheduled to be read at the predetermined time interval, and
wherein a change in the display position of each of the area to be read and the area scheduled to be read is synchronized with a change in the display position of the marker.

9. The device of any one of claims 5 to 8, wherein the marker comprises a touch detecting area that is able to detect a touch operation by a user, and
wherein the means for causing a user to perform reading training further comprises:
a means for determining whether a touch operation to the touch detecting area has been detected while the marker is displayed; and
a means for outputting a result of the determination.

10. The device of any one of claims 4 to 9, comprising a means for evaluating a result of training of the flash display,
wherein the means for causing a user to perform reading training further comprises a means for setting an initial condition of the reading training based on a result of the evaluation.

11. The device of claim 10, wherein the initial condition comprises at least one of: a predetermined time interval of a sound generated from the device; or the number of display positions of the marker per page.

12. The device of any one of claims 1 to 11, further comprising a means for causing a user to perform line spread training.

13. The device of claim 12, wherein the means for causing a user to perform line spread training comprises:
a means for displaying a page of a book;
a means for displaying a marker on the page of the book;
a means for detecting that the user has touched the page of the book; and
a means for changing a display position of the marker in response to detecting that the user has touched the page of the book.

14. The device of claim 13, wherein the means for causing a user to perform line spread training further comprises:
a means for highlighting an area to be read indicating an area that the user should currently read on the page of the book; and
a means for highlighting an area scheduled to be read indicating an area that the user should read next on the page of the book,
wherein the marker is displayed on the area to be read and/or the area scheduled to be read, and
wherein an embodiment of highlighting the area to be read is different from an embodiment of highlighting the area scheduled to be read.

15. The device of claim 14, wherein the means for causing a user to perform line spread training further comprises:
a means for changing a display position of each of the area to be read and the area scheduled to be read in response to detecting that the user has touched the page of the book, and
wherein a change in the display position of each of the area to be read and the area scheduled to be read is synchronized with a change in the display position of the marker.

16. The device of any one of claims 12 to 15, comprising a means for evaluating a result of training of the flash display,
wherein the means for causing a user to perform line spread training further comprises a means for setting an initial condition of the line spread training based on a result of the evaluation.

17. The device of claim 16, wherein the initial condition comprises the number of display positions of the marker per page.

18. The device of any one of claims 1 to 17, further comprising a means for causing a user to perform speed listening training.

19. The device of claim 18, wherein the means for causing a user to perform speed listening training comprises:
a means for setting an output speed scale factor of a sound to be output; and
a means for outputting the sound to be output at the set output speed scale factor.

20. The device of claim 19, wherein the means for causing a user to perform speed listening training further comprises a means for identifying the sound to be output.

21. The device of any one of claims 18 to 20, comprising a means for evaluating a result of training of the flash display,
wherein the means for causing a user to perform speed listening training further comprises a means for setting an initial condition of the speed listening training based on a result of the evaluation.

22. A device comprising:
a means for displaying a book having a plurality of pages; and
a means for turning the plurality of pages of the book one by one at high speed.

23. A program executed in a device, the device comprising a processor unit,
wherein the program, when executed in the processor unit, causes the processor unit to execute at least:
flashingly displaying a text or image in a reversed or inverted manner or in an inverted and reversed manner.

24. A program executed in a device, the device comprising a processor unit,
wherein the program, when executed in the processor unit, causes the processor unit to execute at least:
displaying a book having a plurality of pages; and
turning the plurality of pages of the book one by one at high speed.

25. A training method for developing a user's skill, the method comprising:
providing a first device comprising a means for causing the user to perform flash training and a second device comprising a means for causing the user to perform reading training to the user;
using the first device to cause the user to perform flash training; and
using the second device to cause the user to perform reading training.

26. The method of claim 25, further comprising:
providing a third device comprising a means for causing the user to perform speed listening training to the user; and
using the third device to cause the user to perform speed listening training.

27. The method of claim 25 or 26, further comprising:
providing a fourth device comprising a means for causing the user to perform line spread training to the user; and
using the fourth device to cause the user to perform line spread training.
